Europäisches Patentamt

European Patent Office

Office européen des brevets

(19)

(11) EP 1 547 684 A1

(12) **EUROPEAN PATENT APPLICATION**

(43) Date of publication:
**29.06.2005 Bulletin 2005/26**

(51) Int Cl.7: **B01J 29/70**, C01G 11/00,
C10G 35/00, B01J 29/76

(21) Application number: **05102327.3**

(22) Date of filing: **12.11.1999**

| | |
|---|---|
| (84) Designated Contracting States:<br>**AT BE CH CY DE DK ES FI FR GB GR IE IT LI LU MC NL PT SE**<br><br>(30) Priority: **16.11.1998 EP 98402839**<br><br>(62) Document number(s) of the earlier application(s) in accordance with Art. 76 EPC:<br>**99962151.9 / 1 137 741** | (71) Applicant: **SHELL INTERNATIONALE RESEARCH MAATSCHAPPIJ B.V.**<br>**2596 HR Den Haag (NL)**<br><br>(72) Inventor: **The designation of the inventor has not yet been filed**<br><br>Remarks:<br>This application was filed on 23.03.2005 as a divisional application to the application mentioned under INID code 62. |

(54) **Catalytic dewaxing process**

(57) The invention relates to a process for the catalytic dewaxing of a hydrocarbon feed comprising waxy molecules by contacting the hydrocarbon feed under catalytic dewaxing conditions with a catalyst composition comprising MTW crystallites, a binder and a hydrogenation component, wherein the weight ratio of the MTW crystallites and the binder is between 5:95 and 35:65. The invention also relates to a catalyst composition comprising MTW crystallites, a binder and a hydrogenation component, wherein the weight ratio of the MTW crystallites and the binder is between 5:95 and 35:65.

EP 1 547 684 A1

**Description**

The invention relates to a process for the catalytic dewaxing of a hydrocarbon feed comprising waxy molecules by contacting the hydrocarbon feed under catalytic dewaxing conditions with a catalyst composition comprising metallosilicate crystallites, a binder and a hydrogenation component. With the term comprising used in this specification is meant comprising at least, meaning that also other components may be present in, for example, the catalyst composition or hydrocarbon feed.

Such a process is described in EP-A-185448. This patent publication discloses a process for the manufacture of lubricating oils in which a hydrocarbon feedstock is subjected to catalytic dewaxing in the presence of a catalyst composition consisting of ZSM-22, an alumina binder and platinum. The catalyst was prepared by impregnating an extrudate consisting of 65 wt% ZSM-22 and 35 wt% alumina resulting in a catalyst containing 0.57 wt% of platinum.

There is a continuous effort in the field of catalytic dewaxing of improving the yield and the viscosity index (VI) of the lubricating obtained by said process. Furthermore efforts are made to provide a catalytic dewaxing process which can compete with solvent dewaxing processes in respect of for example oil yield and viscosity index at the same pour point specification. Solvent dewaxing is a difficult to operate semi-continuous process. Being able to replace a solvent extraction process by a catalytic dewaxing process is therefore desirable.

The object of the invention has been achieved with the following process. Process for the catalytic dewaxing of a hydrocarbon feed comprising waxy molecules by contacting the hydrocarbon feed under catalytic dewaxing conditions with a catalyst composition comprising MTW crystallites, a binder and a hydrogenation component, wherein the weight ratio of the MTW crystallites and the binder is between 5:95 and 35:65.

It has been found that with the present process a high yield of base oil product can be obtained at the same weight hourly space velocity. This implies that with a lower amount of MTW crystallites more dewaxing selectivity is achieved. Furthermore it results in that the catalyst employed in the process according to the invention is cheaper than the prior art catalysts because less of the relatively more expensive MTW crystallites is used in the catalyst composition. An additional advantage is that the gas make is lower with the present process.

WO-A-9617902 describes a catalyst composition for the catalytic dewaxing comprising of a aluminosilicate zeolite material and a binder in amounts from 80:20 to 20:80 by weight and typically from 80:20 to 50:50 zeolite:binder.

EP-A-304251 describes a catalytic dewaxing process in which preferably a catalyst composition is used without a binder. The catalyst used in the experiments is a nickel on ZSM-5 catalyst without a binder.

By catalytic dewaxing is here meant a process for decreasing the pour point of lubricating base oil products by selectively converting the components of the oil feed which impart a high pour point to products which do not impart a high pour point. Products which impart a high pour point are compounds having a high melting point. These compounds are referred to as waxes. Wax compounds include for example high temperature melting normal paraffins, iso-paraffins and mono-ringed compounds. The pour point is preferably reduced by at least 10 °C and more preferably by at least 20 °C. The hydrocarbon oils to be used as feed in the process according to the present invention will thus contain waxy molecules which impart an undesirable high pour point. Small amounts of these compounds can strongly influence the pour point. The feed will suitably contain between about 1% and up to 100% of these waxy compounds.

Suitable hydrocarbon oil feeds to be employed in the process according to the present invention are mixtures of high-boiling hydrocarbons, such as, for instance, heavy oil fractions. It has been found particularly suitable to use vacuum distillate fractions derived from an atmospheric residue, i.e. distillate fractions obtained by vacuum distillation of a residual fraction which in return is obtained by atmospheric distillation of a crude oil, as the feed. The boiling range of such a vacuum distillate fraction is usually between 300 and 620 °C, suitably between 350 and 580 °C. However, deasphalted residual oil fractions, including both deasphalted atmospheric residues and deasphalted vacuum residues, may also be applied. If the vacuum distillate fractions contain substantial amounts of sulphur- and nitrogen-containing contaminants, for example, having sulphur levels up to 3% by weight and nitrogen levels up to 1% by weight, it may be advantageous to treat this feedstock to a hydrodesulphurisation and hydrodenitrogenation step prior to the catalytic dewaxing process according to the present invention.

Examples of feeds having relatively high amounts of waxy compounds are synthetic waxy raffinates (Fischer-Tropsch waxy raffinates), hydrocracker bottom fractions (hydrowax), i.e. those fractions having an effective cutpoint of at least 320 °C, preferably at least 360 °C and slack waxes obtained from the dewaxing of hydroprocessed or solvent refined waxy distillates. These feeds have a wax content of at least 50% by weight, preferably at least 80% by weight and more preferably at least 90% by weight. These feeds are used to prepare lubricating base oils having viscosity indices (VI) above 120 and particularly above 135.

Prior to the catalytic dewaxing process according to the invention the vacuum distillate fraction or any other sulphur or nitrogen containing feedstock is preferably treated to a hydrotreating step in order to reduce the concentration of sulphur and/or nitrogen in the feed. The hydrotreating step preferably involves contacting the feed with hydrogen in the presence of a suitable catalyst. Such catalysts are known in the art and in principle any hydrotreating catalyst known to be active in the hydrodesulphurisation and hydrodenitrogenation of the relevant hydrocarbon feeds may be used. Suitable catalysts, then, include those catalysts comprising as the non-noble Group VIII metal component one or more of nickel (Ni) and cobalt (Co) in an amount of from 1 to 25 percent by weight (%wt), preferably 2 to 15 %wt, calculated as element relative to total weight of catalyst and as the Group VIB metal component one or more of molybdenum (Mo) and tungsten (W) in an amount of from 5 to 30 %wt, preferably 10 to 25 %wt, calculated as element relative to total weight of catalyst. These metal components may be present in elemental, oxidic and/or sulphidic form and are supported on a refractory oxide carrier. The refractory oxide support of the first stage catalyst may be any inorganic oxide, alumino-silicate or combination of these, optionally in combination with an inert binder material. Examples of suitable refractory oxides include inorganic oxides, such as alumina, silica, titania, zirconia, boria, silica-alumina, fluorided alumina, fluorided silica-alumina and mixtures of two or more of these. In a preferred embodiment an acidic carrier such as alumina, silica-alumina or fluorided alumina is used as the refractory oxide carrier.

Catalytic dewaxing conditions are known in the art and typically involve operating temperatures in the range of from 200 to 500 °C, suitably from 250 to 400 °C, hydrogen pressures in the range of from 10 to 200 bar, suitably from 15 to 100 bar, more suitably from 15 to 65 bar, weight hourly space velocities (WHSV) in the range of from 0.1 to 10 kg of oil per litre of catalyst per hour (kg/l/hr), suitably from 0.2 to 5 kg/l/hr, more suitably from 0.5 to 3 kg/l/hr and hydrogen to oil ratios in the range of from 100 to 2,000 litres of hydrogen per litre of oil.

The weight ratio of the MTW crystallites and the binder is between 5:95 and 35:65. Preferably the weight ratio is 10:90 and above. The upper ratio is preferably lower than 30:70. It has been found that a lower ratio is beneficial for achieving the advantages of the present invention. However when lowering this ratio a higher operating temperature is required to achieve a comparable pour point reduction. Therefore a ratio of 5:95 is the practical lower range of the MTW crystallites to binder weight ratio, because at lower ratios the required operating temperatures will be too high for practical applications.

The binder can be a synthetic or naturally occurring (inorganic) substance, for example clay, silica and/or metal oxides. Natural occurring clays are for example of the montmorillonite and kaolin families. The binder is preferably a porous binder material, for example a refractory oxide of which examples are: alumina, silica-alumina, silica-magnesia, silica-zirconia, silica-thoria, silica-beryllia, silica-titania as well as ternary compositions for example silica-alumina-thoria, silica-alumina-zirconia, silica-alumina-magnesia and silica-magnesia-zirconia. More preferably a low acidity refractory oxide binder material which is essentially free of alumina is used. Examples of these binder materials are as silica, zirconia, titanium dioxide, germanium dioxide, boria and mixtures of two or more of these of which examples are listed above. The most preferred binder is silica.

The hydrogenation component suitably comprises at least one Group VIB metal component and/or at least one Group VIII metal component. Group VIB metal components include tungsten, molybdenum and/or chromium as sulphide, oxide and/or in elemental form. If present, a Group VIB metal component is suitably present in an amount of from 1 to 35% by weight, more suitably from 5 to 30% by weight, calculated as element and based on total weight of support, i.e. modified molecular sieve plus binder.

More preferably only a Group VIII metal component is present as the catalytically active hydrogenation component. Group VIII metal components include those components based on both noble and non-noble metals. Particularly suitable Group VIII metal components, accordingly, are palladium, platinum, nickel and/or cobalt in sulphidic, oxidic and/or elemental form. The total amount Group VIII metal will suitably not exceed 10% by weight calculated as element and based on total weight of support, and preferably is in the range of from 0.1 to 5.0% by weight, more preferably from 0.2 to 3.0% by weight. If both platinum and palladium are present, the weight ratio of platinum to palladium may vary within wide limits, but suitably is in the range of from 0.05 to 10, more suitably 0.1 to 5. Catalysts comprising palladium and/or platinum as the hydrogenation component are preferred.

Examples of molecular sieve crystallites having the MTW-type topology are ZSM-12, Nu-13, TEA-silicate, TPZ-3, TPZ-12, VS-12 and Theta-3 as for example described in US-A-3832449, EP-A-513118, EP-A-59059 and EP-A-162719.

When using the MTW crystallites it has been found to be advantageous to subject the catalyst to a dealumination treatment. Advantages of this treatment are a further increase of the yield of lubricating base oil, an improved stability of the catalyst and/or an improved crush strength of the final catalyst. Dealumination results in a reduction of the number of alumina moieties present in the zeolite and hence in a reduction of the mole percentage of alumina.

Dealumination treatment is preferably performed in that the surface of the zeolite crystallites is selectively dealuminated. Surface dealumination results in a reduction of the number of surface acid sites of the zeolite crystallites, whilst not affecting the internal structure of the zeolite crystallites. The extent of dealumination of the surface of the crystallites depends on the severity of the dealumination treatment. Suitably, the number of surface acid sites of the zeolite is reduced with at least 70%, preferably with at least 80% and even more preferably with at least 90%. In a most preferred embodiment the number of surface acid sites is reduced with essentially 100% by the selective dealumination, thus leaving essentially no surface acid sites at all.

Dealumination can be attained by methods known in the art. Particularly useful methods are those, wherein the dealumination selectively occurs, or anyhow is claimed to occur selectively, at the surface of the crystallites of the molecular sieve. Examples of dealumination processes are described in WO-A-9641849. Preferably dealumination is performed by a process in which the zeolite is contacted with an aqueous solution of a fluorosilicate salt wherein the fluorosilicate salt is represented by the formula:

$$(A)_{2/b}SiF_6$$

wherein 'A' is a metallic or non-metallic cation other than H+ having the valence 'b'. Examples of cations 'b' are alkylammonium, $NH_4^+$, $Mg^{++}$, $Li^+$, $Na^+$, $K^+$, $Ba^{++}$, $Cd^{++}$, $Cu^+$, $Ca^{++}$, $Cs^+$, $Fe^{++}$, $Co^{++}$, $Pb^{++}$, $Mn^{++}$, $Rb^+$, $Ag^+$, $Sr^{++}$, $Tl^+$, and $Zn^{++}$. Preferably 'A' is the ammonium cation. The zeolite material may be contacted with the fluorosilicate salt in an amount of at least 0.0075 moles per 100 grams of the zeolite MTW material. The pH is suitably between 3 and 7. An example of the above described dealumination process also referred to as the AHS treatment, is described in US-A-5157191.

When MTW crystallites are used which have been subjected to a dealumination treatment the binder material is preferably a material which does not introduce acidity into the modified zeolite crystallite. Such a binder material is preferably the above described low acidity refractory oxide, which is essentially free of aluminium. It has been found that an increased mechanical strength of the catalyst extrudate is obtained when prepared according to this sequence of steps.

The MTW crystallite size of the zeolite may be as high as 100 micron. Preferably small crystallites are used in order to achieve an optimum catalytic activity. Preferably crystallites smaller than 10 micron and more preferably smaller than 1 micron are used. The practical lower limit is suitably 0.1 micron. It has been found that the combination of small size crystallites and a surface dealumination treatment, especially the AHS treatment, as described above results in more active catalyst when compared to the same, but non-dealuminated, catalyst. Preferable catalysts are used having a crystallite size of between 0.05 and 0.2 μm and which have been subjected to a dealumination treatment. The invention is also directed to the novel catalyst compositions having such small size surface dealuminated zeolite crystallites and low acidity binder materials and their use in hydrocarbon conversion processes, optionally also comprising a Group VIII or Group VIB metal of which examples are mentioned above. Suitable processes are catalytic dewaxing, hydroisomerisation and hydrocracking.

A disadvantage of a catalyst composition having a low content of MTW crystallites is that the crush strength is not always high enough to suit practical application. To overcome this problem applicants have now found a preferred method of preparing such catalysts having an improved crush strength as will be described below. The method is especially suitable when using a low acidity refractory binder. This method comprises the steps of:

(a) preparing an extrudable mass comprising a substantially homogenous mixture of MTW crystallites, water, a source of the low acidity refractory oxide binder present as a mixture of a powder and a sol,
(b) extruding the extrudable mass resulting from step (a),
(c) drying the extrudate resulting from step (b) and,
(d) calcining the dried extrudate resulting from step (c).

Catalyst particles obtained by the above process have an increased crushing strength. This is advantageous because such catalysts are typically applied in a packed bed reactor. Due to the normally high operating pressure and mass flows in the reactor strong catalyst particles are needed.

The description of the above method will further refer to a silica binder only. It will be understood that the below preferred conditions will, when applicable, also apply to other possible binders as here described.

Preferably the silica sol is an acid silica sol. The acid silica sol may be any colloidal silica having a pH lower than 7. When a pH value is mentioned the pH as measured in water of 18 °C is meant. An example of a suitable acid silica sol is Nyacol 2034DI (trademark of PQ Corp, Valley Forge, Pennsylvania) or Ultra-Sol 7H (trademark of RESI Inc, Newark). The silica powder may be commercially obtained silica powder, for example Sipernat 22 or 50 (trademark of Degussa AG), Nasilco Ultrasil VN3SP or HiSil 233 EP (trademark of PPG Industries). The solid silica powder particles preferably have a mean diameter of between 10 μm and 200 μm.

The surface of the acid silica sol particle comprises -OH groups. It is believed that for obtaining a catalyst particle having an even higher strength it is essential that during the mixing of the components in step (a) some or all of these groups are converted to -0- groups. This is preferably achieved by adding an amine compound in step (a). It has further been found that when adding an amine compound just before performing step (b) an even more stronger catalyst particle is obtained. It is believed, although we do not wish to be bound to this theory, that the stronger catalyst is obtained because not all of the -OH groups on the sol particle surface are converted into -O⁻ groups. Thus step (a) is preferably performed by first mixing the zeolite and the acid silica sol into a first homogeneous mixture and subsequently adding the amine compound to the first homogeneous mixture such that the pH of the resulting second mixture is raised from below 7 to a value of above 8. It can be easily determined by one skilled in the art, by straightforward experimentation, what the optimal moment in step (a) is for adding the amine compound. As a guideline it is preferred to add the amine compound during the second half of the time and more preferably in the last quarter of the time required to mix the components in step (a). Most preferably the amine compound is added within 20 minutes before performing step (b).

The extrudable mass in step (a) should have a sufficient viscosity in order to be extruded into shapes. One skilled in the art will know how to achieve such a paste like mixture. For example by adding water in step (a) the viscosity can be lowered. The water content of the sol may be between 60 and 80 wt%. Preferably the water content of the extrudable mass as obtained in step (a) does not exceed 60%, and preferably is at least 35% by weight.

To obtain an even stronger catalysts it is preferred to maximise the amount of acid silica sol used relative the amount of silica powder used, while still achieving a sufficient viscosity of the extrudable mass. The optimal amount of silica powder to be used will depend on the zeolite content, wherein at a low zeolite content of the catalyst, more silica powder will have to be used. One skilled in the art can easily determine the optimal composition in view of the above teaching.

The amine compound is preferably a compound according to the general formula $R^1R^2R^3N$ in which $R^1$-$R^3$ may be hydrogen and/or an alkyl group having 1-6 carbon atoms. Examples are ammonia, methyl ethyl amine, triethyl amine, of which ammonia, is the most preferred. The amine compound should preferably be added in such an amount in order to raise the pH of the mass to alkaline conditions. Preferred conditions are a pH of the mixture obtained in step (a) of above 8. The pH will be lower than 14.

Step (a) may for example be performed at ambient conditions by first mixing the zeolite, optionally the silica powder and acid silica sol, subsequently adding an amine compound and optionally at the end of step (a) a plasticising agent. The plasticiser agent is used to increase the viscosity of the mixture in order to obtain an extrudable mass. Suitable plasticising agents are for example dextrose, gelatine, glucose, glues, gums, salts, waxes, starch and cellulose ethers. Some typical cellulose ether binders are methylcellulose, ethylhydroxy ethylcellulose, hydroxybutyl methylcellulose, hydroxymethylcellulose, hydroxypropyl methylcellulose,hydroxyethyl methylcellulose, hydroxybutylcellulose, hydroxyethylcellulose, hydroxypropylcellulose, sodium carboxy methylcellulose, and mixtures thereof. Methylcellulose and/or methylcellulose derivatives are especially suited as organic binders in the practice of the present invention with methylcellulose, hydroxypropyl methylcellulose, or combinations of these being preferred. Preferred sources of cellulose ethers are Methocel A4M, F4M, F240, and K75M (Trademarks of Dow Chemical Co).

The extrusion in step (b) may be performed by well known processes as for example illustrated in Perry's Chemical Engineers' Handbook, McGRAW-HILL International Editions, sixth edition, 1984, p 8-60 to 8-66 and in Particle Size Enlargement, Handbook of powder Technology Vol. 1, Elsevier, 1980, p 112-121. Examples of such methods are extrusion performed by a screw extruder, a plate or ram extruder. The extrudates can have a wide variety of forms and sizes.

Drying step (c) and calcining step (d) may be performed under conditions well known to one skilled in the art. Step (c), for example, may take place at a temperature of at least 60 °C to about 250 °C, for a time sufficient to dry the extrudate, for example, for at least 1 hour. Calcining step (d), for example, may take place in air, or other inert gas, at temperatures ranging from 250 °C to 850 °C for periods of time ranging, for example, from about 1 to about 48 hours or more.

The invention is also related to a catalyst composition having the improved crushing strength as obtainable by the method as described above and its use in hydroconversion processes.

The product obtained in the catalytic dewaxing process according to the invention may optionally be subjected to a hydrofinishing step. Hydrofinishing is known in the art and examples of suitable hydrofinishing steps are disclosed in, for instance, US-A-5139647, WO-A-9201657 and WO-A-9201769. Generally, hydrofinishing comprises contacting a hydrocarbon feed, in this case a feed comprising the dewaxed lubricating base oil, with a hydrogenation catalyst under relatively mild conditions in order to saturate at least part of the aromatics still present in the dewaxed base oil. Suitable catalysts are those normally applied for this purpose with noble metal-based catalysts, such as those comprising Pt and/or Pd supported on an amorphous silica-alumina carrier or comprising Pt on an alumina support, being preferred options. Hydrofinishing conditions normally involve operating temperatures up to 350 °C and preferably between 150 and 300 °C, operating pressures from 10 to 200 bar and weight hourly space velocities of from 0.5 to 7.5 kg/l/h.

The effluent from the catalytic dewaxing process or optionally the effluent of a hydrofinishing treatment applied subsequently is separated into a gaseous fraction and a liquid fraction. Such separation or fractionation can be attained by conventional methods, such as by distillation under atmospheric or reduced pressure. Of these, distillation under reduced pressure, including vacuum flashing and vacuum distillation, is most suitably applied. The cutpoint(s) of the distillate fraction(s) is/are selected such that each product distillate recovered has the desired properties for its envisaged application. For lubricating base oils, the cutpoint will normally be at least 280 °C and will normally not exceed 400 °C, the exact cutpoint being determined by the desired product properties, such as volatility, viscosity, viscosity index and pour point.

The invention is also directed to the novel catalyst composition as described above and its use in hydroconversion processes in general.

The invention will now be illustrated with the following non-limiting examples.

Example 1

A dealuminated, silica bound ZSM-5 catalyst (10 %wt dealuminated ZSM-5, 90 %wt silica binder) was prepared according to the following procedure. ZSM-5 (having a $SiO_2/Al_2O_3$ molar ratio of 50) was extruded with a silica binder (10% by weight of ZSM-5, 90% by weight of silica binder). The extrudates were dried at 120 °C. A solution of $(NH_4)_2SiF_6$ (45 ml of 0.077 N solution per gram of ZSM-5 crystallites) was poured onto the extrudates. The mixture was then heated at 100 °C under reflux for 17 h with gentle stirring above the extrudates. After filtration, the extrudates were washed twice with deionised water, dried for 2 hours at 120 °C and then calcined for 2 hours at 480°C. The dealuminated ZSM-5 thus obtained had a $SiO_2/Al_2O_3$ molar ratio 26.0.

The thus obtained extrudate was impregnated with an aqueous solution of platinum tetramine hydroxide followed by drying (2 hours at 120 °C) and calcining (2 hours at 300 °C). The catalyst was activated by reduction of the platinum under a hydrogen rate of 100 l/hr at a temperature of 350 °C for 2 hours. The resulting catalyst comprised 0.7% by weight Pt supported on the dealuminated, silica-bound ZSM-5.

A hydrocracked waxy raffinate having the properties as listed in Table I was contacted in the presence of hydrogen with the dealuminated, silica-bound ZSM-5 catalyst at a temperature of 310 °C, an outlet pressure of 40 bar, a WHSV of 1.0 kg/l.hr and a hydrogen gas rate of 700 Nl/kg. Gaseous components were separated from the effluent by vacuum flashing at a cutting temperature of 300 °C. The properties of the obtained lubricating base oil product and the yield of the catalytic dewaxing experiment are given in Table II.

Table I Properties of hydrocracked waxy raffinate

| Density 70/4 | 0.817 | Boiling point distribution (% wt) | |
|---|---|---|---|
| Vk40 (cSt) | 21.8 | IBP-380 °C | 10 |
| Vk100 (cSt) | 4.51 | 380-420 °C | 40 |
| VI | 121 | 420-470 °C | 40 |
| Sulphur (ppmw) | 2.9 | 470-FBP °C | 10 |
| Nitrogen (ppmw) | < 1 | | |
| Pour point (°C) | +27 | IBP (°C) | 334 |
| Wax content(%wt) | 16.7 | FBP (°C) | 538 |

Vk40 is kinematic viscosity measured at 40 °C; Vk100 is the kinematic viscosity at 100 °C.

Example 2

Example 1 was repeated except that the content of ZSM-5 was 30 wt%. The properties of the obtained lubricating base oil product and the yield of the catalytic dewaxing experiment are given in Table II.

Example 2a

Comparative Example 1 was repeated except that a catalyst was used consisted of 90 wt% silica binder, 10 wt% ZSM-12 powder and a platinum loading of 0.7 wt%. The crystal size of the ZSM-12 crystallites was 1 μm and the extrudate was dealuminated as in Example 1. The properties of the obtained lubricating base oil product and the yield of the catalytic dewaxing experiment are given in Table II.

Example 2b

Example 2a was repeated except that the crystal size was between 0.1 and 0.2 μm. See Table II for more results.

Example 2c

Example 2b was repeated except that no dealumination treatment was used to prepare the catalyst. See Table II for more results.

Comparative experiment A

Example 1 was repeated except that the amount of ZSM-5 crystallites in the catalyst was increased to 60 wt%. The resulting catalyst comprised 0.7% by weight Pt supported on the dealuminated, silica-bound ZSM-5 catalyst. The properties of the obtained lubricating base oil product and the yield of the catalytic dewaxing experiment are given in Table II.

Table II

| Product characteristics | | | | | | |
|---|---|---|---|---|---|---|
| | Example 1 | Example 2 | Example 2a | Example 2b | Example 2c | Comp. Exper. A |
| catalyst | ZSM-5 | ZSM-5 | ZSM-12 size=1-2 μm | ZSM-12 size =0.1-0.2 μm | ZSM-12 size =0.1-0.2 μm no AHS | ZSM-5 |
| reaction temperature | 310 °C | 309 °C | 358 °C | 312 °C | 350 °C | 294 °C |
| Yield (% wt) | 80 | 78 | 91 | 91 | 82.4 | 75.6 |
| Gas make (% wt) | 4.3 | 5.5 | 2.9 | 3.6 | 3.6 | 7.6 |
| Pour point (°C) | -16 | -16 | -16 | -16 | -16 | -16 |
| VI | 105 | 104 | 108 | 108 | 105 | 101 |

The following examples will illustrate the preparation of a catalyst having a low aluminosilicate zeolite content and a high crushing strength.

Comparative Experiment B

On a dry basis, 60 weight parts of ZSM-5 (CBV8014 as obtained from Zeolyst International) were intimately admixed with 15 weight parts of amorphous precipitated silica powder (Sipernat-50 as obtained from Degussa) and with 25 weight parts of acid colloidal silica (Nyacol 2034DI as obtained from PQ Corporation); a homogenous mix was obtained by mulling. The total moisture content of the mix was adjusted to 55 weight percent with deionized water.
5 minutes before extruding the mixture a plasticiser agent, Methocel source (containing 2.1 wt% methocel), was added to the extrudable mass in a ratio of 7/100 of Methocel source relative to the zeolite dry mass. The mixture was extruded to yield cylinder extrudates with a diameter of 1.6 mm. The extrudates were subsequently dried at 120 °C for typically 2 hours in air and then calcined at 800 °C for 5 hours.
The Flat Plate Crushing Strength was measured by determining the force in N/cm at which the cylinder extrudate was crushed between two parallel flat plates. The cylinder extrudate was positioned between the plates in such that the cylindrical axis was parallel with the plates. This procedure was repeated 40 times and the average force at which crushing was observed was the resulting Flat Plate Crushing Strength (FPCS). In this example a FPCS of 60 N/cm was measured. See also Table VI.

## Example 3

Comparative Experiment B was repeated except that the ZSM-5 content was 30 wt%, the silica powder content was 35 wt% and the acid silica sol content was 35 wt%. A FPCS of 86 N/cm was measured. As a result of the lower ZSM-5 content as compared to Comparative Experiment D one would expect a lower FPCS. The resulting higher FPCS is a result of the higher content of acid silica sol as compared to Comparative Experiment D. The FPCS is however not high enough for commercial application. A value of higher than 100 N/cm is desirable. See also Table VI.

## Example 4

Example 3 was repeated except instead of acid silica sol the same amount of basic colloidal silica of the type Ludox HS-30 was used. The Flat Plate Crushing Strength was 80 N/cm.

## Example 5

Example 3 was repeated except that, after mixing the ZSM-5, silica powder and acid colloidal silica, ammonia was added. Ammonia as a 2.5 wt% aqueous solution was added in a ratio of 1/12 ammonia solution relative to the zeolite dry mass. The resulting pH was 8.8. After adding the ammonia the mixing was continued for 35 minutes before extruding. The Flat Plate Crushing Strength was 122 N/cm. See also Table VI.

## Example 6

Example 5 was repeated except that ammonia was added after 35 minutes after mixing the ZSM-5, silica powder and acid colloidal silica. After adding the ammonia the mixing was continued for 10 minutes before extruding. The Flat Plate Crushing Strength was 178 N/cm.

Table VI

| Experiment | ZSM-5 content (wt%) | Silica powder (wt%) | Silica sol (wt%) | acidity of used silica sol | ammonia added | FPCS (N/cm) |
|---|---|---|---|---|---|---|
| Comp. D | 60 | 15 | 25 | acid | no | 60 |
| Example 6 | 30 | 35 | 35 | acid | no | 86 |
| Example 7 | 30 | 35 | 35 | basic | no | 80 |
| Example 8 | 30 | 35 | 35 | acid | 35 minutes before extrusion | 122 |
| Example 9 | 30 | 35 | 35 | acid | 10 minutes before extrusion | 178 |

**Claims**

1. Process for the catalytic dewaxing of a hydrocarbon feed comprising waxy molecules by contacting the hydrocarbon feed under catalytic dewaxing conditions with a catalyst composition comprising MTW crystallites, a binder and a hydrogenation component, wherein the weight ratio of the MTW crystallites and the binder is between 5:95 and 35:65.

2. Process according to claim 1, wherein the weight ratio of the MTW crystallites and the binder is between 10:90 and 30:70.

3. Process according to any one of claims 1-2, wherein the binder is a low acidity refractory oxide, which is essentially free of aluminium.

4. Process according to claim 3, wherein the binder is silica.

5. Process according to any one of claims 3-4, wherein the MTW crystallites have been subjected to a dealumination treatment.

6. Process according to claim 5, wherein the dealuminated MTW crystallites are obtained by contacting the MTW crystallites with an aqueous solution of a fluorosilicate salt wherein the fluorosilicate salt is represented by the formula:

$$(A)_{2/b}SiF_6$$

wherein 'A' is a metallic or non-metallic cation other than H+ having the valence 'b', preferably ammonium.

7. Process according to claim 6, wherein an extrudate of the MTW crystallites and the binder is contacted with the aqueous solution of the fluorosilicate salt.

8. Process according to any one of claims 1-7, wherein the hydrocarbon feed is a hydrotreated vacuum distillate fraction boiling between 300 and 620 °C.

9. Process according to any one of claims 1-7, wherein the hydrocarbon feed is a wax containing feedstock obtained by a Fischer-Tropsch process.

10. Process according to any one of claims 1-7, wherein the hydrocarbon feed is a wax containing heavy product of a hydrocracker, which hydrocrackers main products are middle distillates.

11. Process according to any one of claims 1-7, wherein the hydrocarbon feed is a slack wax.

12. Process according to any one of claims 1-11, wherein the hydrogenation component is palladium, platinum, nickel and or cobalt in sulphidic, oxidic and/or elemental form.

13. Process according to any one of claims 1-12, wherein the product of the dewaxing process is subjected to a hydrofinishing step.

14. Process according to any one of claims 1-13, wherein the hydrogenation component is palladium, platinum, nickel and or cobalt in sulphidic, oxidic and/or elemental form.

15. Process according to any one of claims 1-14, wherein the catalyst composition is obtained by performing at least the following steps:

    (a) preparing an extrudable mass comprising a substantially homogenous mixture of MTW crystallites, water, a source of the low acidity refractory oxide binder present as a mixture of a powder and a sol,
    (b) extruding the extrudable mass resulting from step (a),
    (c) drying the extrudate resulting from step (b) and,
    (d) calcining the dried extrudate resulting from step (c).

16. Process according to claim 15, wherein step (a) is performed by first mixing the of MTW crystallites, the powder and an acid sol of the low acidity refractory oxide into a first homogeneous mixture and subsequently adding an amine compound to the first homogeneous mixture such that the pH of the resulting second mixture is raised from below 7 to a value of above 8.

17. Process according to claim 16, wherein the amine compound is added in step (a) within 20 minutes of performing step (b).

18. Process according to any one of claims 16-17, wherein the amine compound is ammonia.

19. Catalyst composition comprising MTW crystallites, a binder and a hydrogenation component, wherein the weight ratio of the MTW crystallites and the binder is between 5:95 and 35:65.

20. Catalyst composition according to claim 19, wherein the binder is a low acidity refractory oxide binder, which binder is essentially free of aluminium.

21. Catalyst composition according to claim 20, wherein the binder is silica.

22. Catalyst composition according to any one of claims 19-21, wherein the weight ratio of the MTW crystallites and the binder is between 10:90 and 30:70.

23. Catalyst composition comprising a low acidity refractory oxide binder, which binder is essentially free of aluminium, MTW crystallites and a hydrogenation component, wherein the crystallite size is between 0.05 and 0.2 $\mu$m and wherein the zeolite crystallites have been subjected to a surface dealumination treatment.

24. Catalyst according to claim 23, wherein the dealuminated MTW crystallites are obtained by contacting the zeolite crystallites with an aqueous solution of a fluorosilicate salt, wherein the fluorosilicate salt is represented by the formula:

$$(A)_{2/b}SiF_6,$$

wherein 'A' is a metallic or non-metallic cation other than H+ having the valence 'b', preferably ammonium.

25. Catalyst according to claim 23, wherein an extrudate of the aluminosilicate zeolite crystallites and the binder is contacted with the aqueous solution of the fluorosilicate salt.

26. Use of a catalyst according to any one of claims 19-24 in a hydroconversion process.

**European Patent Office**

## EUROPEAN SEARCH REPORT

Application Number

EP 05 10 2327

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 4 575 416 A (CHESTER ET AL) 11 March 1986 (1986-03-11) * column 3, line 25 - column 11, line 10; claims; examples; tables * ----- | 1-26 | B01J29/70 C01G11/00 C10G35/00 B01J29/76 |
| X | EP 0 183 419 A (MOBIL OIL CORPORATION) 4 June 1986 (1986-06-04) * column 1, line 26 - column 10, line 65; claims; examples; tables * ----- | 1-26 | |
| X | US 4 510 044 A (OLECK ET AL) 9 April 1985 (1985-04-09) * column 2, line 66 - column 7, line 35; claims; examples; tables * ----- | 1-26 | |
| X | GB 1 444 481 A (MOBIL OIL CORPORATION) 28 July 1976 (1976-07-28) * page 4, line 30 - page 11, line 50; claims; examples; tables * ----- | 1-26 | |
| X | US 4 309 281 A (DESSAU ET AL) 5 January 1982 (1982-01-05) * column 4, line 20 - column 11, line 40; claims; examples; tables * ----- | 1-26 | TECHNICAL FIELDS SEARCHED (Int.Cl.7) B01J C01G C10G |
| A | WO 98/02502 A (CHEVRON U.S.A. INC) 22 January 1998 (1998-01-22) * the whole document * ----- | 1-26 | |

The present search report has been drawn up for all claims

| Place of search | Date of completion of the search | Examiner |
|---|---|---|
| Munich | 26 April 2005 | de Cauwer, R |

EPO FORM 1503 03.82 (P04C01)

**ANNEX TO THE EUROPEAN SEARCH REPORT
ON EUROPEAN PATENT APPLICATION NO.**    EP 05 10 2327

This annex lists the patent family members relating to the patent documents cited in  the above-mentioned European search report.
The members are as contained in the European Patent Office EDP file on
The European Patent Office is in no way liable for these particulars which are merely  given for the purpose of information.

26-04-2005

| Patent document cited in search report | | Publication date | Patent family member(s) | | Publication date |
|---|---|---|---|---|---|
| US 4575416 | A | 11-03-1986 | AU | 584622 B2 | 01-06-1989 |
| | | | AU | 4463585 A | 22-01-1987 |
| | | | BR | 8503369 A | 08-04-1986 |
| | | | CA | 1253108 A1 | 25-04-1989 |
| | | | DE | 3584400 D1 | 21-11-1991 |
| | | | DK | 321285 A ,B, | 17-01-1986 |
| | | | EP | 0169025 A2 | 22-01-1986 |
| | | | JP | 2048555 C | 25-04-1996 |
| | | | JP | 7081147 B | 30-08-1995 |
| | | | JP | 61043697 A | 03-03-1986 |
| | | | NZ | 212648 A | 27-11-1987 |
| EP 0183419 | A | 04-06-1986 | EP | 0183419 A2 | 04-06-1986 |
| | | | JP | 61130393 A | 18-06-1986 |
| | | | US | 4767522 A | 30-08-1988 |
| US 4510044 | A | 09-04-1985 | US | 4458024 A | 03-07-1984 |
| | | | JP | 58146445 A | 01-09-1983 |
| | | | US | 4440630 A | 03-04-1984 |
| GB 1444481 | A | 28-07-1976 | US | 3856872 A | 24-12-1974 |
| | | | US | 3856873 A | 24-12-1974 |
| | | | BE | 819849 A1 | 12-03-1975 |
| | | | CA | 1026771 A1 | 21-02-1978 |
| | | | CS | 180026 B2 | 30-12-1977 |
| | | | DD | 112971 A5 | 12-05-1975 |
| | | | DE | 2442241 A1 | 20-03-1975 |
| | | | ES | 428303 A1 | 01-10-1976 |
| | | | FR | 2243920 A1 | 11-04-1975 |
| | | | IN | 141101 A1 | 15-01-1977 |
| | | | IT | 1021338 B | 30-01-1978 |
| | | | JP | 961275 C | 28-06-1979 |
| | | | JP | 50053336 A | 12-05-1975 |
| | | | JP | 53041658 B | 06-11-1978 |
| | | | NL | 7412092 A ,B, | 17-03-1975 |
| | | | PL | 97858 B1 | 30-03-1978 |
| | | | RO | 71614 A1 | 10-05-1982 |
| | | | ZA | 7404643 A | 25-02-1976 |
| | | | CA | 1024170 A1 | 10-01-1978 |
| | | | US | RE30157 E | 20-11-1979 |
| US 4309281 | A | 05-01-1982 | EP | 0031676 A1 | 08-07-1981 |
| | | | JP | 56095125 A | 01-08-1981 |
| | | | US | 4453029 A | 05-06-1984 |
| | | | US | 4444986 A | 24-04-1984 |
| | | | US | 4423280 A | 27-12-1983 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 05 10 2327

This annex lists the patent family members relating to the patent documents cited in the above-mentioned European search report.
The members are as contained in the European Patent Office EDP file on
The European Patent Office is in no way liable for these particulars which are merely given for the purpose of information.

26-04-2005

| Patent document cited in search report | | Publication date | Patent family member(s) | | Publication date |
|---|---|---|---|---|---|
| US 4309281 | A | | US | 4448671 A | 15-05-1984 |
| | | | US | 4487688 A | 11-12-1984 |
| | | | US | 4517402 A | 14-05-1985 |
| | | | US | 4469913 A | 04-09-1984 |
| WO 9802502 | A | 22-01-1998 | AU | 724570 B2 | 28-09-2000 |
| | | | AU | 3716597 A | 09-02-1998 |
| | | | BR | 9710321 A | 17-08-1999 |
| | | | CA | 2260104 A1 | 22-01-1998 |
| | | | CN | 1225662 A ,C | 11-08-1999 |
| | | | CZ | 9900097 A3 | 14-04-1999 |
| | | | DE | 69724790 D1 | 16-10-2003 |
| | | | EA | 850 B1 | 26-06-2000 |
| | | | EP | 0912659 A1 | 06-05-1999 |
| | | | ES | 2207741 T3 | 01-06-2004 |
| | | | HU | 0003145 A2 | 28-02-2001 |
| | | | ID | 17464 A | 08-01-1998 |
| | | | JP | 2001525861 T | 11-12-2001 |
| | | | KR | 2000023804 A | 25-04-2000 |
| | | | PL | 331039 A1 | 21-06-1999 |
| | | | TR | 9900098 T2 | 21-04-1999 |
| | | | WO | 9802502 A1 | 22-01-1998 |
| | | | US | 6264826 B1 | 24-07-2001 |
| | | | US | 5993644 A | 30-11-1999 |

EPO FORM P0459

For more details about this annex : see Official Journal of the European Patent Office, No. 12/82